# EUROPÄISCHE PATENTANMELDUNG

(11) **EP 4 050 276 A1**
(43) Veröffentlichungstag der Anmeldung: **31.08.2022**
(21) Anmeldenummer: 22153113.0
(22) Anmeldetag: 25.01.2022
(51) Int. Cl.: F24F 8/10, F24F 8/90, F24F 8/108

(54) **LUFTREINIGER UND VERFAHREN ZUR BEHANDLUNG VON RAUMLUFT**

(30) Priorität: 25.02.2021 DE 102021104549
(71) Anmelder: Miele & Cie. KG, 33332 Gütersloh (DE)
(72) Erfinder: Gayk, Karsten, 44265 Dortmund (DE); Hilbig, Timo, 59192 Bergkamen (DE); Busch, Jan, 31319 Sehnde (DE); Taphorn, Bernd, 30165 Hannover (DE)

(57) **Zusammenfassung**

Die Erfindung betrifft ein Verfahren zur Behandlung von Raumluft (3) eines Raums (2) mittels eines Luftreinigers (1). Der Luftreiniger (1) umfasst einen Lufteinlass (4) zur Einleitung von Raumluft (3) aus dem Raum (2) in den Luftreiniger (1) und einen Luftauslass (5) zur Ausleitung der Raumluft (3) aus dem Luftreiniger (1) zurück in den Raum (2). Außerdem umfasst der Luftreiniger (1) ein Gebläse (6) zur gerichteten Führung der Raumluft (3) von dem Lufteinlass (4) zu dem Luftauslass (5). Weiterhin weist der Luftreiniger (1) mindestens einen Schwebstofffilter (8) zur Filtration der durch den Luftreiniger (1) geführten Raumluft (3) auf.

Es ist erfindungsgemäß vorgesehen, dass der Schwebstofffilter (8) zumindest in einem Regenerationsbetrieb des Luftreinigers (1), in dem der Schwebstofffilter (8) regeneriert wird, mittels eines Infrarotstrahlers (7) bestrahlt und dadurch erhitzt wird. Außerdem umfasst die Erfindung einen Luftreiniger (1) zum Durchführen des Verfahrens.

## Beschreibung

Die Erfindung betrifft ein Verfahren zur Behandlung von Raumluft gemäß dem Oberbegriff von Anspruch 1. Außerdem betrifft die Erfindung einen Luftreiniger gemäß dem Anspruch 9.

Das Verfahren ist zur Behandlung von Raumluft eines Raumes mittels eines Luftreinigers geeignet. Der Luftreiniger umfasst einen Lufteinlass zur Einleitung von Raumluft aus dem Raum in den Luftreiniger und einen Luftauslass zur Ausleitung der Raumluft aus dem Luftreiniger zurück in den Raum. Weiterhin weist der Luftreiniger ein Gebläse zur gerichteten Führung der Raumluft von dem Lufteinlass zu dem Luftauslass auf. Außerdem umfasst der Luftreiniger mindestens einen Schwebstofffilter zur Filtration der durch den Lufteiniger geführten Raumluft. Hierbei kann es sich beispielsweise um einen HEPA Filter handeln.

Der Lufteinlass ist derart mit dem Luftauslass fluidleitend verbunden, dass der Lufteinlass stromaufwärts und der Luftauslass stromabwärts entsprechend einer Flussrichtung der Raumluft innerhalb des Luftreinigers angeordnet sind. Mit anderen Worten bildet der Lufteinlass den "Anfang" und der Luftauslass das "Ende" des Luftreinigers. Das Gebläse ist üblicherweise dem Lufteinlass entsprechend der Flussrichtung nachgeschaltet und befördert die aus dem Raum mittels des Lufteinlasses aufgenommene Raumluft in Richtung des Schwebstofffilters, welcher üblicherweise dem Gebläse entsprechend der Flussrichtung nachgeschaltet ist. Mit anderen Worten ist der Schwebstofffilter typischerweise in Flussrichtung der Raumluft zwischen dem Gebläse und dem Luftauslass angeordnet.

Hierbei handelt es sich um einen kontinuierlichen Fließprozess, da der Luftreiniger dieselbe Menge Raumluft mittels des Lufteinlasses aus dem Raum aufnimmt, wie der Luftreiniger mittels des Luftauslasses in den Raum zurückgibt. Die Menge Raumluft, die den Luftreiniger in einer bestimmten Zeitspanne durchströmt, wird auch als Volumenstrom bezeichnet. In Zusammenhang insbesondere mit dem Gebläse wird der Volumenstrom auch als Förderleistung bezeichnet. Mit anderen Worten nimmt der Luftreiniger kontinuierlich die Raumluft aus dem Raum auf, filtert diese mittels des Schwebstofffilters und gibt die gefilterte Raumluft in derselben Menge wieder in den Raum zurück.

Während eines Betriebes des Luftreinigers kann sich der Schwebstofffilter mit Mikroorganismen aus der Raumluft anreichern. Dies ist insbesondere dann der Fall, wenn der Schwebstofffilter in einer bevorzugten Weise über ein entsprechend feines Filtervlies verfügt, sodass der Schwebstofffilter zumindest der Klasse der HEPA-Filter zuzuordnen ist. Die Raumluft weist einen Anteil an Luftfeuchte auf. Diese Luftfeuchte kann in der Raumluft als flüssiges Wasser, welches sich in Form von Tröpfchen an kleinen Partikeln der Raumluft, beispielsweise Schmutz, absetzt, vorliegen. Außerdem kann in der Raumluft auch gasförmiges Wasser in Form von Wasserdampf vorliegen. Das daher üblicherweise warme und feuchte Milieu innerhalb des Luftreinigers stellt eine ideale Wachstumsbedingung für die Bakterien und/oder Pilzen dar. Hinzu können organische Ablagerungen kommen, welche in der verschmutzten Raumluft vorliegen. Insbesondere Schimmelsporen können sich dort bei ausreichend Feuchtigkeit im Substrat vermehren und organische Materialien angreifen, also beispielsweise Filterstoffe, Holzrahmen, Klebstoffe. Dies führt zu kürzeren Wartungszyklen der Schwebstofffilter. Bei der Wartung ist das Personal ohne Schutzausrüstung einer Gefährdung durch Schimmelpilzsporen ausgesetzt.

Verfahren zur Behandlung von Raumluft der vorstehend beschriebenen Art sind im Stand der Technik bereits bekannt. Hierzu wird beispielhaft auf die deutsche Gebrauchsmusterschrift DE 20 2020 003 124 U1 hingewiesen. Der darin beschriebene Luftreiniger, die insbesondere ein Lüfter oder Heizlüfter sein kann, ist zur Umwälzung oder/und Temperierung von Raumluft geeignet. Er umfasst ein Gehäuse mit einem Lufteinlass, sowie einen mit dem Lufteinlass fluidleitend verbundenen Luftauslass, wobei zwischen dem Lufteinlass und dem Luftauslass wenigstens ein Gebläse vorgesehen ist. Kennzeichnend ist hierbei, dass stromaufwärts oder/und stromabwärts des Gebläses zumindest ein Schwebstofffilter angeordnet ist. Weiterhin geht aus der Gebrauchsmusterschrift hervor, dass die Strömungsmaschine in einer vorteilhaften Ausgestaltung wenigstens ein Heizelement umfassen kann, mittels welchem ein die Strömungsmaschine passierender Luftstrom im Sinne einer Erhitzung temperiert werden kann. Insbesondere kann die Erhitzung auf eine solche Temperatur beziehungsweise Temperaturspanne erfolgen, bei welcher Mikroorganismen inaktivierbar oder/und abtötbar beziehungsweise zerstörbar sind. Als Temperaturspanne wird 55°C bis 120°C vorgeschlagen, wobei die Temperatur vorzugsweise 55°C bis 100°C und besonders vorzugsweise 55°C bis 70°C betragen soll.

Dem allgemeinen Stand der Technik sind außerdem Verfahren zur Behandlung von Raumluft als bekannt zu entnehmen, bei welchen die Raumluft zumindest teilweise mittels Ultraviolettstrahlung (UV-Strahlung), insbesondere UV-C-Strahlung bestrahlt wird.

In der Praxis hat sich gezeigt, dass bei den Verfahren gemäß dem Stand der Technik Nachteile vorliegen. Von Verfahren, bei welchen UV-Strahlung zum Einsatz kommt, ist bekannt, dass in Abhängigkeit von der Bauart und Qualität von zur Erzeugung der UV-Strahlung eingesetzter UV-Lampen, insbesondere UV-C-Lampen, Ozon gebildet wird. Dieses Ozon wird mit der Raumluft in den Raum eingeleitet und kann bei Menschen und Tieren zu Reizungen von Atemwegen und Augen führen. Außerdem begünstigt Ozon Atemwegserkrankungen. Auch solche Verfahren, bei denen keine UV-Lampen eingesetzt werden, haben aufgrund der hohen erzeugten Temperaturen Nachteile. Durch die hohen Temperaturen werden Partikel- und Schwebstofffilter wärmebelastet, was diese bei herkömmlicher Bauart nicht aushalten und sich in Folge verformen. Partikel- und Schwebstofffilter, welche temperaturbeständig, insbesondere hochtemperaturbeständig sind, sind aufwendig und daher kostenintensiv. Zudem ist aufgrund der hohen Temperaturen eine Isolierung notwendig, die berührbare Oberflächen vor unzulässigen Temperaturen schützt. Nachteilig ist weiterhin, dass eine Regeneration der Partikel- und Schwebstofffilter nur während eines Betriebes mit geringer Luftfördermenge erfolgen kann beziehungsweise darf. Dementsprechend kann der Luftreiniger beziehungsweise dessen Partikel- und Schwebstofffilter nicht während eines Regelbetriebes gereinigt beziehungsweise regeneriert werden.

Der vorliegenden Anmeldung liegt mithin die Aufgabe zugrunde, ein Verfahren sowie einen Luftreiniger der vorstehend genannten Art derart weiterzubilden, dass die Nachteile des Standes der Technik vermieden werden.

Die zugrundeliegende Aufgabe wird erfindungsgemäß mittels eines Verfahrens mit den Merkmalen des Anspruches 1 sowie mittels eines Luftreinigers mit den Merkmalen des Anspruchs 9 gelöst. Vorteilhafte Ausgestaltungen ergeben sich aus den zugehörigen Unteransprüchen.

Erfindungsgemäß ist vorgesehen, dass der Schwebstofffilter zumindest in einem Regenerationsbetrieb des Luftreinigers, in dem der Schwebstofffilter regeneriert wird, mittels eines Infrarotstrahlers bestrahlt und dadurch erhitzt wird.

Im Sinne des Regenerationsbetriebes ist zu verstehen, dass dem Schwebstofffilter von üblichen Krankheitserregern während des Regelbetriebes "regeneriert" wird, indem dem Schwebstofffilter eine für das Wachstum von Mikroorganismen wichtige Lebensgrundlage entzogen wird. Im Regenerationsbetrieb wird der Schwebstofffilter die im Normalbetrieb aufgenommenen Feuchtigkeit entzogen. Während des Regenerationsbetriebs ist der Volumenstrom vorzugsweise reduziert, damit die zu erzielenden Temperaturen, derer es zur Regeneration des Schwebstofffilters bedarf, durch Erhitzen erreicht werden können.

Das erfindungsgemäße Verfahren hat viele Vorteile und unterscheidet sich von dem Stand der Technik grundlegend.

Durch ein Bestrahlen des Schwebstofffilters mittels des Infrarotstrahlers wird der Schwebstofffilter beziehungsweise zumindest dessen Oberfläche derart erhitzt, dass durch die höhere Temperatur ein feindliches Milieu für Mikroorganismen bereitgestellt wird. Mit anderen Worten werden hierdurch ideale Lebensbedingungen, welche durch das üblicherweise warme und feuchte Milieu gegeben sind, für die Krankheitserreger verhindert. Wieder mit anderen Worten ist das Milieu des Schwebstofffilters infolge des Erhitzens mittels des Infrarotstrahlers derart beschaffen, dass sich die Krankheitserreger nicht vermehren können und dadurch unschädlich gemacht werden. Vorteilhafterweise ergibt sich hierdurch ein unproblematischer Filterwechsel.

Die Anordnung der Strahlungsquelle erfolgt vorteilhafterweise auf der Filter-Eingangsseite, da sich insbesondere hier die Mikroorganismen ansammeln und vermehren. Die Strahlungsquelle ist hierbei stromaufwärts des Schwebstofffilters angeordnet.

In besonders vorteilhafter Ausgestaltung wird die Infrarotstrahlung mittels eines Quarzstrahlers erzeugt, der eine Unterform des Infrarotstrahlers darstellt. Hierbei kann die Strahlung des Quarzstrahlers mit warmen Sonnenstrahlen verglichen werden, welche für eine wohlige Atmosphäre und eine effektive Wärmewirkung sorgen. Eine Besonderheit des Quarzstrahlers liegt im Aufbau: Ein Heizwiderstand, welcher von Strom durchflossen wird, befindet sich in einem mit Inertgas befüllten Quarzrohr. Im Vergleich zu einem herkömmlichen Heizstrahler ist die Temperatur des Drahtes höher.

Weiterhin vorteilhaft ist, dass durch die Infrarotstrahlung kein Prozess verursacht beziehungsweise begünstigt wird, der Ozon produziert. Hierdurch ergibt sich der Vorteil, dass die Raumluft besonders gesundheitsfreundlich behandelt werden kann und besonders schadstoffarm ist.

In vorteilhafter Ausgestaltung des erfindungsgemäßen Verfahrens ist vorgesehen, dass der Infrarotstrahler seine Strahlungsleistung in einem Spektralbereich von > 780 nm abgibt. Eine Wellenlänge oberhalb von 780 nm und üblicherweise unterhalb von 1 mm charakterisiert eine Infrarotstrahlung. Mit anderen Worten handelt es sich bei der vom Infrarotstrahler emittierten Strahlung vorzugsweise um Infrarotstrahlung. In der Praxis hat sich gezeigt, dass durch diese Infrarotstrahlung beispielsweise der Schwebstofffilter derart erwärmt werden kann, dass er einerseits ein feindliches Milieu für Krankheitserreger darstellt und andererseits nicht so stark erwärmt wird, dass er Schaden nimmt. Durch zu starkes Erhitzen bei zu hohen Temperaturen kann der Schwebstofffilter Schaden nehmen, da in dem Schwebstofffilter vorhandene Klebstoffe nicht für derartig hohe Temperaturen ausgelegt sind und sich somit zersetzen. In der Folge kommt es zu einer Beschädigung des Schwebstofffilters. Vorteilhafterweise ergibt sich hierdurch ein besonders verschleißarmer Betrieb des Luftreinigers.

Das erfindungsgemäße Verfahren weiter ausgestaltend ist vorgesehen, dass die Wellenlänge der von dem Infrarotstrahler abgegebenen Strahlung zumindest zeitweise verändert wird, vorzugsweise in einem Spektralbereich zwischen 780 nm und 50.000 nm, vorzugsweise zwischen 3.000 nm und 30.000 nm. Aus physikalischer Sicht ist Strahlungsenergie umgekehrt proportional zur Wellenlänge. Mit anderen Worten ist die Strahlungsenergie umso größer, je kleiner die Wellenlänge ist. Es kann daher vorteilhaft sein, die Wellenlänge beispielsweise während des Regenerationsbetriebes zumindest zeitweise zu verändern und somit die eingebrachte Strahlungsenergie zu beeinflussen. Mit anderen Worten ist es möglich, die in den Schwebstofffilter eingebrachte Strahlungsenergie mittels der Wellenlänge einzustellen beziehungsweise zu steuern. Durch die in den Schwebstofffilter eingebrachte Strahlungsenergie wird der Schwebstofffilter erhitzt, da dieser die Strahlungsenergie absorbiert und somit in Wärme umwandelt.

Es ist weiterhin besonders vorteilhaft, solche Strahlungsquellen zu verwenden, die gedimmt werden können. Hierbei kann die Strahlung in einem auch als nahes Infrarot (NIR) bezeichneten Spektralbereich mit einer Wellenlänge von 0,78 µm bis 3,0 µm oder einem auch als fernes Infrarot (FIR) bezeichneten Spektralbereich mit einer Wellenlänge von 50 µm bis 1000 µm liegen. Besonders vorteilhaft kann eine Wellenlänge sein, die bis in einen unteren Bereich eines auch als mittleres Infrarot (MIR) bezeichneten Spektralbereichs mit einer Wellenlänge von 3 µm bis 50 µm reicht.

Eine Abgabe eines breitbandigen Strahlungsspektrums gemäß den vorgenannten Grenzen ist insofern vorteilhaft, als hierdurch verschiedene Eindringtiefen der Strahlung und verschiedene Absorptionsgrade erzielt werden können. Mit anderen Worten beeinflusst die Wellenlänge die Eindringtiefe der Strahlung in den Schwebstofffilter. Hierdurch ist es möglich, mittels der Wellenlänge die Eindringtiefe derart einzustellen, dass insbesondere, vorzugsweise lediglich, die Oberfläche des Schwebstofffilters erhitzt wird, nicht aber dessen Grundkörper, der wegen seiner Klebstoffe anfällig für die Wärmebelastung ist. Wieder mit anderen Worten kann die Erhitzung des Schwebstofffilters zumindest mittelbar durch Einstellen der Wellenlänge eingestellt beziehungsweise gesteuert werden, insbesondere betreffend die Eindringtiefe der Strahlung und entsprechend die Erwärmung des Schwebstofffilters unterhalb einer unmittelbar bestrahlbaren Oberfläche. Hierdurch kann der Schwebstofffilter zeitweise stark oder weniger stark erhitzt werden, derart, dass die Erwärmung beispielsweise gerade ausreicht, um das für die Krankheitserreger feindliche Milieu bereitzustellen beziehungsweise aufrechtzuerhalten. Gleichzeitig wird eine Wärmebelastung des Schwebstofffilters möglichst geringgehalten. Vorteilhafterweise ergibt sich hierdurch ein für den Schwebstofffilter besonders schonender Betrieb.

In einer besonders vorteilhaften Ausgestaltung ist vorgesehen, dass der Schwebstofffilter zumindest in dem Regenerationsbetrieb des Luftreinigers derart mittels des Infrarotstrahlers bestrahlt wird, dass eine Oberflächentemperatur des Schwebstofffilters zwischen 40°C und 100°C, vorzugsweise zwischen 40°C und 80°C, weiter vorzugsweise zwischen 40°C und 60°C, noch weiter vorzugsweise zwischen 40°C und 50°C, liegt. Hierdurch ist die Temperatur besonders genau in der Temperaturspanne eingestellt, in welcher die Trocknung des Filters sehr effizient erfolgt. Mit anderen Worten ist die Temperatur nicht unnötig hoch, sodass die Wärmebelastung des Schwebstofffilters besonders geringgehalten wird. Hierdurch ergibt sich vorteilhafterweise ein besonders guter Werterhalt und eine längere Standzeit des Schwebstofffilters.

Hierbei kann es vorgesehen sein, mittels eines mathematischen Heizmodelles eine für die Oberflächentemperatur erforderliche Energiemenge zu berechnen. Als Parameter für das Heizmodell können beispielsweise die Eindringtiefe der Strahlung in den Schwebstofffilter, eine aufzuheizende Masse, beispielsweise des Schwebstofffilters, und ein Temperaturhub vorgesehen sein. Außerdem kann ein Temperatursensor vorgesehen sein, mittels dessen eine Umgebungstemperatur, beispielsweise der Raumluft, gemessen werden kann. In Abhängigkeit von einer Modellierung mittels des mathematischen Heizmodelles wird der Infrarotstrahler mittels einer Steuerung gesteuert beziehungsweise in seiner Heizleistung eingestellt. Hierdurch kann der Infrarotstrahler besonders gut auf die Umgebungstemperatur abgestimmt werden, wodurch sich vorteilhafterweise ein besonders umweltschonender Betrieb ergibt.

In einer weiteren besonders vorteilhaften Ausführungsform der Erfindung kann die Oberflächentemperatur der Filtereingangsseite z.B. mit Hilfe eines Pyrometers gemessen und die Infrarotleistung auf eine bestimmte Temperatur oder einen Temperaturbereich geregelt werden.

Vorteilhafterweise wird der Infrarotstrahler nur während des Regenerationsbetriebs betrieben, wobei vorzugsweise der Regenerationsbetrieb in einer Intervallschaltung aktiviert und deaktiviert wird. Hierdurch kann der Schwebstofffilter in einem Intervall getrocknet bzw. regeneriert werden, das besonders günstig ist. Beispielsweise kann der Schwebstofffilter während einer Ruhezeit, also außerhalb des Regelbetriebes, gereinigt werden. Die Intervallschaltung kann außerdem in Abhängigkeit von einer Verschmutzung oder Belastung durch die Krankheitserreger des Schwebstofffilters erfolgen. Hierdurch ergibt sich der Vorteil, dass der Luftreiniger besonders bedarfsgerecht betrieben werden kann. Hierbei ist es ebenso denkbar, eine Konzentration einer oder mehrerer Krankheitserreger auf oder in dem Schwebstofffilter sensorisch zu erfassen und den Regenerationsbetrieb bei Überschreiten einer definierten Grenzkonzentration zu aktivieren und bei Unterschreiten entsprechend zu deaktivieren.

In einer weiteren besonders vorteilhaften Ausgestaltung ist vorgesehen, dass der Regenerationsbetrieb und der auch als Regelbetrieb bezeichnete Normalbetrieb des Luftreinigers, in dem der Schwebstofffilter nicht regeneriert wird, zu unterschiedlich großen Zeitanteilen alternierend ausgeführt werden, vorzugsweise in Zeitintervallen von jeweils 8 h Normal- und 15 min Regenerationsbetrieb. Mit anderen Worten arbeitet (im Sinne des Normalbetriebes) der Luftreiniger in längeren und regeneriert (im Sinne des Regenerationsbetriebes) in kürzeren Anteilen. In Versuchen hat sich gezeigt, dass der Luftfilter hierdurch besonders sparsam betrieben werden kann, dadurch ergibt sich ein besonders effizienter Betrieb.

Eine weitere vorteilhafte Ausführungsform der Erfindung besteht darin, dass der Regenerationsbetrieb und ein Normalbetrieb des Luftreinigers, in dem der Schwebstofffilter nicht regeneriert wird, zu verschiedenen Zeitanteilen alternierend ausgeführt werden, vorzugsweise in einer Taktung Regenerationsbetrieb zu Normalbetrieb von 30 min : 8 h oder 20 min : 4 h oder 15 : 2 h. Abhängig von der Größe der Luftreiniger zum Behandeln der Raumluft sind verschiedene Taktungen vorteilhaft, wobei bei kleineren Luftreinigern kürzere Phasen des Regenerationsbetriebs bevorzugt verwendet werden. Insbesondere das Verkürzen des Regenerationsbetriebs wirkt sich positiv auf den Energieverbrauch aus und führt zu einer kurzen Zeitspanne, in der die Förderleistung des Gebläses reduziert werden muss. Dadurch kann eine konstant hohe Luftqualität gewährleistet werden.

Eine weitere Ausführungsform der Erfindung besteht darin, dass im Regenerationsbetrieb weitere Intervalle aus aktivierter und deaktivierter Beheizung gebildet werden. Diese Intervalle bestehen aus 5 min beheizt: 5 min unbeheizt.

Eine weitere Ausführungsform der Erfindung besteht darin, dass die Intervalle während des Regenerationsbetriebs aus vorzugsweise 1 min beheizt: 5 min unbeheizt, weiter vorzugsweise 20 s beheizt: 5 min unbeheizt bestehen.

Vorteilhafterweise ist vorgesehen, dass eine Förderleistung des Gebläses in dem Regenerationsbetrieb gegenüber einem Normalbetrieb des Luftreinigers, in dem der Schwebstofffilter nicht regeneriert wird, reduziert wird, vorzugsweise auf höchstens 50 %, vorzugsweise höchstens 20 %, weiter vorzugsweise sogar auf 0 %, seiner in dem Normalbetrieb vorhandenen Förderleistung. Hierdurch ist der Volumenstrom der Raumluft gegenüber dem Normalbetrieb reduziert. Dies hat den Vorteil, dass der Schwebstofffilter besser erhitzt werden kann, da ein in diesem Moment unerwünschter Kühlungseffekt, der durch Raumluft bedingt ist, die durch den Schwebstofffilter strömt, reduziert wird. Hierdurch ergibt sich vorteilhafterweise ein besonders energiesparender Betrieb. Die Reduzierung der Förderleistung wirkt sich auch vorteilhaft auf die Lärmbelastung im Raum aus. Gleichzeitig hat die zeitweise Verringerung der Förderleistung kaum Einfluss auf die Luftqualität im Raum, da die Regenerationsdauer klein ist im Verhältnis zur Normalbetriebsdauer.

Um die Effektivität des Verfahrens weiter zu erhöhen, kann die Strahlungsquelle zusätzlich auch während des Normalbetriebes bei entsprechend hohem Volumenstrom aktiviert werden. Dadurch wird die Feuchtigkeitsaufnahme des Filters aus der Raumluft auf einem niedrigeren Niveau gehalten und ein Wachstum von Mikroorganismen schon während des Normalbetriebs vermindert. Der oben beschreibene Regenerationsbetrieb findet weiterhin in den genannten Intervallen statt, sodass der Filter regelmäßig vollständig getrocknet wird.

Es ist vorgesehen, dass die Strahlungsquelle während des Normalbetriebs dauerhaft zugeschaltet ist.

In einer vorteilhaften Ausgestaltung wird die Strahlungsquelle in Intervallen von 2 h ausgeschaltet: 10 min eingeschaltet betrieben.

Eine Weiterentwicklung der Erfindung besteht darin, die Strahlungsquelle vorzugsweise in Intervallen von 1 h ausgeschaltet: 5 min eingeschaltet, weiter vorzugsweise in Intervallen von 30 min ausgeschaltet: 2 min eingeschaltet betrieben wird.

Es ist vorgesehen, den Lüfter im Normalbetrieb bei zugeschalteter Infrarot-Strahlung unverändert mit der jeweils vorgesehenen Luftleistung zu betreiben.

In einer vorteilhaften Ausgestaltung wird die Luftleistung bei zugeschalteter Infrarot-Strahlung reduziert vorzugsweise auf höchstens 90 % der jeweils vorgesehenen Luftleistung.

Eine Weiterentwicklung der Erfindung besteht darin, die Luftleistung bei zugeschalteter Infrarot-Strahlung vorzugsweise auf höchstens 80 %, weiter vorzugsweise auf höchstens 50 % der jeweils vorgesehenen Luftleistung zu reduzieren.

In einer vorteilhaften Ausgestaltung ist eine Mehrzahl von Infrarotstrahlern, die jeweils mit dem Schwebstofffilter zusammenwirken, vorgesehen. Alternativ oder zusätzlich kann mindestens ein Spiegel verwendet werden, um eine gesamte Schwebstofffilter-Eingangsseite zu bestrahlen. Die Ausgestaltung ist insbesondere in Abhängigkeit von einer Größe des Schwebstofffilters vorteilhaft. Mit anderen Worten ist es durch die Mehrzahl von Infrarotstrahlern beziehungsweise die Spiegel möglich, den Schwebstofffilter besonders umfangreich zu bestrahlen. Hierdurch ergibt sich vorteilhafterweise ein besonders effektiver Betrieb.

Weiter vorteilhafterweise ist vorgesehen, dass mindestens ein Infrarotstrahler stromaufwärts des Schwebstofffilters angeordnet ist. Hierdurch kann vermieden werden, über Konvektion und ungerichtete Strahlung umliegende Gehäuseteile unnötig aufzuheizen. Stattdessen kann die Strahlung gezielt zur Erwärmung der Oberfläche des Schwebstofffilters eingesetzt werden. Es ergibt sich somit vorteilhafterweise ein besonders energieeffizienter Betrieb.

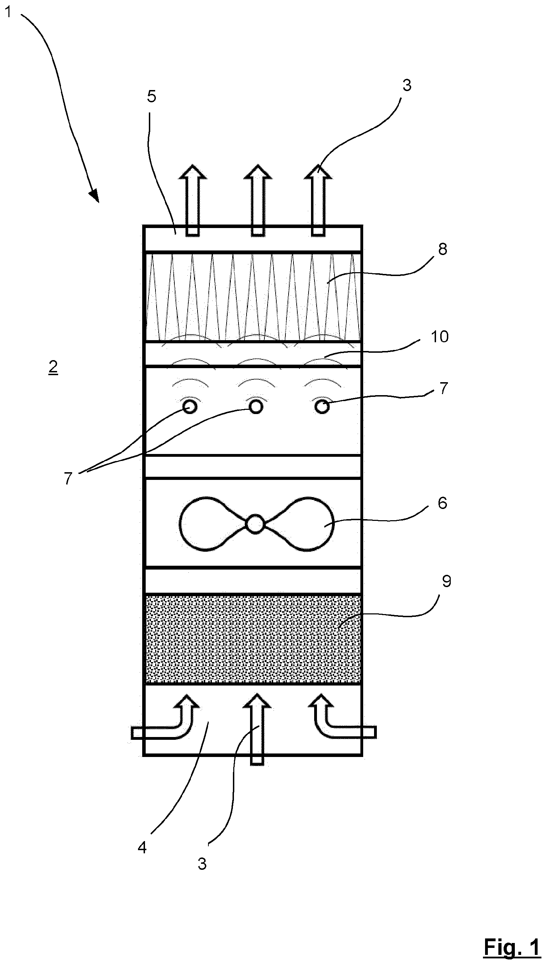

Ein Ausführungsbeispiel der Erfindung ist in den Zeichnungen rein schematisch dargestellt und wird nachfolgend näher beschrieben. Es zeigt die einzige
- Figur 1: eine schematische Prinzipskizze eines erfindungsgemäßen Luftreinigers zum Durchführen eines erfindungsgemäßen Verfahrens.

**Figur 1** zeigt in einer schematischen Prinzipskizze einen erfindungsgemäßen Luftreiniger **1** zum Durchführen eines erfindungsgemäßen Verfahrens. Der Luftreiniger **1** ist üblicherweise in einem Raum **2** angeordnet, um in diesem dessen Raumluft **3** zu behandeln.

Der Luftreiniger **1** umfasst mehrere Bauteile, welche miteinander fluidleitend verbunden sind und im Folgenden näher erläutert werden. Grundsätzlich umfasst der Luftreiniger **1** einen Lufteinlass **4**, mittels dessen die Raumluft **3** aus dem Raum **2** aufnehmbar ist sowie einen Luftauslass **5**, mittels dessen die Raumluft **3** in den Raum **2** zurückleitbar ist. Mit anderen Worten bildet der Lufteinlass **4** den "Anfang" und der Luftauslass **5** das "Ende" des Luftreinigers **1.** Stromaufwärts des Lufteinlasses **4** ist ein Vorfilter **9** angeordnet, mittels dessen die Raumluft vorgefiltert, also von gröberen Verschmutzungen, beispielsweise Dreck und/oder Staub, befreit wird.

Außerdem umfasst der Luftreiniger gemäß **Figur 1** ein Gebläse **6**, welches in Flussrichtung dem Vorfilter **9** nachgeschaltet ist. Mittels des Gebläses **6** kann die Raumluft **3** gerichtet von dem Lufteinlass **4** zum Luftauslass **5** geführt werden. Außerdem ist es möglich, dass durch das Gebläse **6** zumindest innerhalb des Luftreinigers **1** ein Unterdruck erzeugt wird, sodass die Raumluft **3** aus dem Raum **2** angesaugt werden kann.

Außerdem weist der Luftreiniger **1** zusätzlich stromabwärts zu dem Vorfilter **9** einen Schwebstofffilter **8** auf, der hier in Form eines HEPA Filters ausgebildet ist. Mittels des Schwebstofffilters **8** sind Mikroorganismen, insbesondere Krankheitserreger, beispielsweise Viren und/oder Bakterien filterbar. Bei den Krankheitserregern kann es sich auch um Algen oder Pilze handeln. Mit anderen Worten können mittels des Schwebstofffilters **8** solche Partikel aus der Raumluft **3** gefiltert werden, welche mittels des Vorfilters **9** nicht filterbar sind. Auf diese Weise werden die Krankheitserreger aus der Raumluft abgereichert, wodurch die Raumhygiene verbessert wird.

Üblicherweise umfasst die Raumluft **3** eine Luftfeuchte, welche beispielsweise in Form von flüssigem und/oder gasförmigem Wasser, also Wasserdampf, vorliegen kann. Dies ist insofern problematisch, als sich insbesondere am beziehungsweise auf dem Schwebstofffilter **8** ein warmes und feuchtes Milieu bildet beziehungsweise vorliegt, welches ideale Lebensbedingungen für die Krankheitserreger darstellt. In diesem Milieu können sich die Krankheitserreger besonders gut vermehren.

Um eine Anreicherung der Krankheitserreger in dem Schwebstofffilter 8 zu vermeiden, weist der Luftreiniger **1** vorliegend weiterhin einen Infrarotstrahler **7** auf, mittels dessen der Schwebstofffilter **8**, zumindest dessen Oberfläche, bestrahlbar ist. Mittels des Infrarotstrahlers **7** ist Strahlung **10**, insbesondere mit einer Wellenlänger von >780 nm, emittierbar. Der Infrarotstrahler **7** ist derart ausgerichtet, dass zumindest ein Teil der Strahlung **10** auf die Oberfläche des Schwebstofffilters **8** einfällt, welcher die Strahlung **10** absorbiert und somit in Wärme umsetzt. Mit anderen Worten bewirkt die vom Infrarotstrahler **7** emittierte Strahlung **10** eine Erwärmung des Schwebstofffilters **8**, insbesondere dessen Oberfläche. Vorzugweise wird der Schwebstofffilter **8** mittels der Strahlung **10** soweit erwärmt, dass zumindest auf der Oberfläche des Schwebstofffilters **8**, an beziehungsweise auf welcher sich die Krankheitserreger ablagern, eine Temperatur erzeugt wird, bei welcher eine für das Wachstum von Mikroorganismen wichtige Lebensgrundlage entzogen wird und zwar in der Art, dass die im Normalbetrieb aufgenommene Feuchtigkeit getrocknet wird. In dem gezeigten Beispiel wird die Oberfläche des Schwebstofffilters **8** auf >40°C erhitzt. Entsprechend wird mittels des Infrarotstrahlers **7** das Milieu zumindest des Schwebstofffilters **8** derart verändert, dass es besonders unfreundlich für Krankheitserreger ist. Eine Anreicherung der Krankheitserreger in dem Schwebstofffilter **8** und eine dadurch bedingte Belastung des Wartungspersonals beim Filterwechsel kann dadurch vermieden werden.

### Bezugszeichenliste

- 1: Luftreiniger
- 2: Raum
- 3: Raumluft
- 4: Lufteinlass
- 5: Luftauslass
- 6: Gebläse
- 7: Infrarotstrahler
- 8: Schwebstofffilter
- 9: Vorfilter
- 10: Strahlung

## Patentansprüche

1. Verfahren zur Behandlung von Raumluft (3) eines Raums (2) mittels eines Luftreinigers (1), der Luftreiniger (1) umfassend
- einen Lufteinlass (4) zur Einleitung von Raumluft (3) aus dem Raum (2) in den Luftreiniger (1),
- einen Luftauslass (5) zur Ausleitung der Raumluft (3) aus dem Luftreiniger (1) zurück in den Raum (2),
- ein Gebläse (6) zur gerichteten Führung der Raumluft (3) von dem Lufteinlass (4) zu dem Luftauslass (5),
- mindestens einen Schwebstofffilter (8) zur Filtration der durch den Luftreiniger (1) geführten Raumluft (3),
**dadurch gekennzeichnet dass**
der Schwebstofffilter (8) zumindest in einem Regenerationsbetrieb des Luftreinigers (1), in dem der Schwebstofffilter (8) regeneriert wird, mittels eines Infrarotstrahlers (7) bestrahlt und dadurch erhitzt wird.

2. Verfahren nach Anspruch 1, **dadurch gekennzeichnet, dass** der Infrarotstrahler (7) seine Strahlungsleistung in einem Spektralbereich von > 780 nm abgibt.

3. Verfahren nach einem der vorhergehenden Ansprüche, **dadurch gekennzeichnet, dass** eine Wellenlänge der von dem Infrarotstrahler (7) abgegebenen Strahlung (10) zumindest zeitweise verändert wird, vorzugsweise in einem Spektralbereich zwischen 780 nm und 50.000 nm, vorzugsweise zwischen 3.000 nm und 30.000 nm.

4. Verfahren nach einem der vorhergehenden Ansprüche, **dadurch gekennzeichnet, dass** der Schwebstofffilter (8) zumindest in dem Regenerationsbetrieb des Luftreinigers (1) derart mittels des Infrarotstrahlers (7) bestrahlt wird, dass eine Oberflächentemperatur des Schwebstofffilters (8) zwischen 40°C und 100°C, vorzugsweise zwischen 40°C und 80°C, weiter vorzugsweise zwischen 40°C und 60°C, noch weiter vorzugsweise zwischen 40°C und 50°C, liegt.

5. Verfahren nach einem der vorhergehenden Ansprüche, **dadurch gekennzeichnet, dass** der Infrarotstrahler (7) nur während des Regenerationsbetriebs betrieben wird, wobei vorzugsweise der Regenerationsbetrieb in einer Intervallschaltung aktiviert und deaktiviert wird.

6. Verfahren nach Anspruch 5, **dadurch gekennzeichnet, dass** der Regenerationsbetrieb und ein Normalbetrieb des Luftreinigers (1), in dem der Schwebstofffilter (8) nicht regeneriert wird, zu unterschiedlich großen Zeitanteilen alternierend ausgeführt werden, vorzugsweise in Zeitintervallen von 8 h Normal- und 15 min Regenerationsbetrieb.

7. Verfahren nach Anspruch 5, **dadurch gekennzeichnet, dass** der Regenerationsbetrieb und ein Normalbetrieb des Luftreinigers (1), in dem der Schwebstofffilter (8) nicht regeneriert wird, zu verschiedenen Zeitanteilen alternierend ausgeführt werden, vorzugsweise in einer Taktung Regenerationsbetrieb zu Normalbetrieb von 30 min : 8 h oder 20 min : 4 h oder 15 : 2 h.

8. Verfahren nach einem der vorhergehenden Ansprüche, **dadurch gekennzeichnet, dass** eine Förderleistung des Gebläses (6) in dem Regenerationsbetrieb gegenüber einem Normalbetrieb des Luftreinigers (1), in dem der Schwebstofffilter (8) nicht regeneriert wird, reduziert wird, vorzugsweise auf höchstens 50 %, vorzugsweise höchstens 40 %, weiter vorzugsweise höchstens 30 %, seiner in dem Normalbetrieb vorhandenen Förderleistung.

9. Verfahren nach einem der vorhergehenden Ansprüche, **dadurch gekennzeichnet, dass** der Infrarotstrahler während des Normalbetriebs dauerhaft aktiviert ist.

10. Verfahren nach einem der vorhergehenden Ansprüche, **dadurch gekennzeichnet, dass** der Infrarotstrahler während des Normalbetriebs in Intervallen von vorzugsweise 2 h aus-: 10 min eingeschaltet, vorzugsweise 1 h aus- : 5 min eingeschaltet, vorzugsweise 30 min aus- : 2 min eingeschaltet ist.

11. Verfahren nach Anspruch 10 **dadurch gekennzeichnet, dass** die Luftleistung des Gebläses bei aktiviertem Infrarotstrahler im Normalbetrieb vorzugsweise auf höchstens 90 %, vorzugsweise auf höchstens 80 %, weiter vorzugsweise auf höchstens 50 % der jeweils für den Normalbetrieb vorgesehenen Luftleistung reduziert wird.

12. Luftreiniger (1) zur Durchführung eines Verfahrens nach einem der vorhergehenden Ansprüche, umfassend
- einen Lufteinlass (4) zur Einleitung von Raumluft (3) aus dem Raum (2) in den Luftreiniger (1),
- einen Luftauslass (5) zur Ausleitung der Raumluft (3) aus dem Luftreiniger (1) zurück in den Raum (2),
- ein Gebläse (6) zur gerichteten Führung der Raumluft (3) von dem Lufteinlass (4) zu dem Luftauslass (5),
- mindestens einen Schwebstofffilter (8) zur Filtration der durch den Luftreiniger (1) geführten Raumluft (3),
**gekennzeichnet durch**
mindestens einen Infrarotstrahler (7), der derart mit dem Schwebstofffilter (8) zusammenwirkt, dass der Schwebstofffilter (8) mittels des Infrarotstrahlers (7) erhitzbar ist.

13. Luftreiniger (1) nach Anspruch 12, **gekennzeichnet durch** eine Mehrzahl von Infrarotstrahlern (7), die jeweils mit dem Schwebstofffilter (8) zusammenwirken.

14. Luftreiniger (1) nach einem der vorhergehenden Ansprüche, **dadurch gekennzeichnet, dass** mindestens ein Infrarotstrahler (7) stromaufwärts des Schwebstofffilters (8) angeordnet ist.
